(19)

Europäisches Patentamt

European Patent Office

Office européen des brevets

(11) **EP 4 074 990 A1**

(12) **EUROPEAN PATENT APPLICATION**

(43) Date of publication:
**19.10.2022 Bulletin 2022/42**

(21) Application number: **21168037.6**

(22) Date of filing: **13.04.2021**

(51) International Patent Classification (IPC):
***F16B 13/06*** (2006.01)

(52) Cooperative Patent Classification (CPC):
**F16B 13/065**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventor: **Shimahara, Hideki**
**9472 Grabs (CH)**

(74) Representative: **Hilti Aktiengesellschaft**
**Corporate Intellectual Property**
**Feldkircherstrasse 100**
**Postfach 333**
**9494 Schaan (LI)**

(54) **EXPANSION ANCHOR**

(57)     Expansion anchor having an anchor bolt, an expansion sleeve that surrounds the anchor bolt, and a wedge body located in a front region of the anchor bolt for wedging the expansion sleeve, wherein the expansion sleeve has a front face facing the wedge body, wherein at least one expansion slit is provided within the expansion sleeve, wherein the expansion slit originates at the front face of the expansion sleeve, wherein the expansion slit has a stem and a head that adjoins the stem, wherein the head is wider than the stem, and wherein the stem is located between the head and the front face, characterized in that the head is located off-centre with respect to the stem.

Fig. 2

**Description**

The invention relates to an expansion anchor according to the preamble of claim 1. Such an anchor is provided with an anchor bolt, an expansion sleeve that surrounds the anchor bolt, and a wedge body located in a front region of the anchor bolt for wedging the expansion sleeve, wherein the expansion sleeve has a front face facing the wedge body, wherein at least one expansion slit is provided within the expansion sleeve, wherein the expansion slit originates at the front face of the expansion sleeve, wherein the expansion slit has a stem and a head that adjoins the stem, wherein the head is wider than the stem, and wherein the stem is located between the head and the front face of the expansion sleeve.

EP2848825 A1 discloses an expansion anchor in which the expansion sleeve has at least one web on its inner side, which web engages a groove in the anchor bolt. The expansion sleeve thus has non-uniform wall thickness. During installation, the web is displaced radially outwardly by the wedge body of the bolt.

WO19081300 A1 describes an expansion anchor with expansion sleeve abutment walls provided on the expansion body. The expansion sleeve abutment walls can engage with the expansion sleeve to provide an interlock when the anchoring process has reached an advanced state. The expansion sleeve abutment walls can be provided at the ends of recesses provided in the expansion body. On this basis, WO19243084 A1 further teaches to provide said recesses with nonaxisymmetric cross-section. According to WO19243084 A1, the expansion sleeve has, again, non-uniform wall thickness.

WO 15067578 A1 describes an expansion anchor having grooves disposed in the wedge body, wherein the grooves reduce the contact surface between the expansion sleeve and the wedge body.

EP2514979 A1 shows an anchor bolt with an eccentric region that widens the expansion sleeve upon rotation of the anchor bolt.

EP2309138 A2 and WO12126700 A1 describe anchor bolts having structured wedge bodies.

It is an object of the present invention to provide an expansion anchor that is particularly easy to manufacture and/or has particularly high performance.

This objective is achieved by an expansion anchor according to claim 1. The dependent claims describe preferred embodiments.

An inventive anchor is characterized in that the head is located off-centre with respect to the stem.

Accordingly, the head is offset with respect to the stem, in particular in the circumferential direction, and in particular by distance $d_o$. Consequently, a stem centreline defined by the stem does not pass through the centroid of the head. In particular, the union consisting of stem and head can have a nonaxisymmetric outline and/or a music note shaped outline.

The expansion slits define forwardly facing expansion fingers of the expansion sleeve, which expansion fingers are wedged radially outwardly by the wedge body during installation of the anchor. Since the head is, in the circumferential direction, wider than the stem, the head forms a constriction, i.e. a weakening, in the adjacent expansion fingers, which facilitates outward wedging of these expansion fingers. On the other hand, due to its rearward arrangement and due to its width, the head tends to define a bending point when the expansion sleeve is manufactured in a bending process. By arranging the head off-centre with respect to the stem, it is possible to relocate the bending point relevant to the manufacturing process in the circumferential direction, which in term might facilitate the manufacturing process. Notwithstanding, the head can still function to facilitate outward expansion of the adjacent expansion fingers. Thus, a particularly well performing anchor might be obtained at particularly low effort.

The anchor bolt is an elongate body. The wedge body and the anchor bolt are, in particular, connected to transfer tensile forces. The wedge body can for example be threaded to the anchor bolt, in particular if the expansion anchor is a so-called sleeve-type expansion anchor. The wedge body can also be tightly fixed to the anchor bolt, in particular if the expansion anchor is a so-called stud-type expansion anchor. It is particularly preferred in case of a stud-type expansion anchor that the wedge body and the anchor bolt are monolithic, i.e. that they form one piece. If the expansion anchor is a so-called stud-type expansion anchor, the anchor bolt is preferably provided with a forwardly facing shoulder for expansion sleeve abutment and for advancing the expansion sleeve into the borehole. The wedge body is a part of the expansion anchor.

The expansion sleeve surrounds the anchor bolt, in particular around the longitudinal axis of the anchor bolt. In particular, the expansion sleeve can be a single piece.

Preferably, the anchor bolt, the expansion sleeve and/or the wedge body are each steel parts. They can for example comprise carbon steel or stainless steel.

The anchor bolt can have, in particular in a rear region of the anchor bolt, a tension-introducing structure. The tension-introducing structure is for introducing tensile forces into the anchor bolt. The tension-introducing structure can for example be a thread, in particular an external thread, provided on the anchor bolt. The tension-introducing structure can for example also be a head, that forms a maximum cross-section, or a bayonet-type lock.

The wedge zone of the wedge body is intended to expand the expansion sleeve when the wedge body is moved rearwards with respect to the expansion sleeve, in particular to expand the expansion sleeve radially with respect to the longitudinal axis. The wedge body converges, on its lateral surface, towards the rear of the anchor bolt and/or towards the tension-introducing structure, wherein the focus of convergence can preferably be the longitudinal axis. This in particular implies that the radial distance of the lateral surface of the wedge body from the longitudinal axis becomes smaller towards the rear of the wedge body. In particular, the wedge zone forms a wedge for the expansion sleeve.

The at least one expansion slit cuts the expansion sleeve and subdivides the expansion sleeve into expansion fingers. In particular, the at least one expansion slit cuts all the way through the wall thickness of the expansion sleeve, i.e. the expansion slit forms a radial perforation of the expansion sleeve. The expansion slit originates from the front face and extends rearwardly into the expansion sleeve. Preferably, the expansion slit extends generally parallel to the longitudinal axis, but it could also be angled with respect to the longitudinal axis. The stem of the expansion slit is located between the head of the expansion slit and the front face of the expansion sleeve, i.e. the head is located at the rear of the stem. In particular, the head can define a rear end of the expansion slit. The head is wider than the stem, in particular in the circumferential direction. In some embodiments, the front face of the expansion sleeve can be provided with a delta structure that converges into the slit, for example to provide a rounding. The delta structure might be wider than the head, at least in some regions of the delta structure.

Preferably, the expansion sleeve has a plurality of expansion slits originating at the front face of the expansion sleeve. If there is a plurality of expansion slits provided, at least some of them, preferably all of them, are preferably configured in analogy to the at least one expansion slit described herein.

The expansion sleeve might also have one or more additional slits. In contrast to the expansion slit, these additional slits might not have a head.

Where the term "longitudinal axis" is used, this should, in particular, refer to the longitudinal axis of the anchor bolt, which is often also the longitudinal axis of the anchor. In accordance with the usual definition, the "longitudinal axis" can in particular be the axis that runs in the longitudinal direction, i.e. in the long direction of the elongate anchor bolt. Where the terms "radially", "axially" or "circumferentially" are used, this is should in particular be understood with respect to the longitudinal axis of the anchor bolt.

Preferentially, the head has an elongate outline. It is particularly preferred that an axis of elongation of the elongate outline extents generally perpendicular to the stem. Accordingly, the head has a non-circular, elongate outline, wherein, preferably, an axis of elongation of the elongate outline extents generally perpendicular to the stem. Providing the head with an elongate outline can allow to delocalize the bending point relevant to the manufacturing process of the expansion sleeve, which can provide smoother curvature and/or further facilitate manufacturing in a particular easy manner.

In particular, the invention can be used with expansion anchors in which the expansion sleeve has nonconstant wall thickness, i.e. in which the wall of the expansion sleeve varies in dependence of the position on the expansion sleeve. As explained in further detail in e.g. EP2848825 A1, which is included by reference, non-constant wall thickness can be provided in order to improve anchor performance.

Advantageously, the head is off-centre with respect to the stem into an expansion sleeve region of reduced wall thickness. Accordingly, by being off-centre, the head reaches into an expansion sleeve region of reduced wall thickness. In other words, the offset reduces the average wall thickness along the outline of the head, i.e. the average wall thickness along the outline of the head is smaller as compared to a fictional state in which the head was centred with respect to the stem. This can efficiently counteract cracking of the expansion sleeve when it is formed by bending a generally flat blank, and/or improve roundness of the expansion sleeve after such a bending operation. Moreover, resistance for radial expansion of the expansion sleeve can be reduced, which can improve initial anchoring. Also, separation of the expansion fingers during pull out can be efficiently counteracted.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.

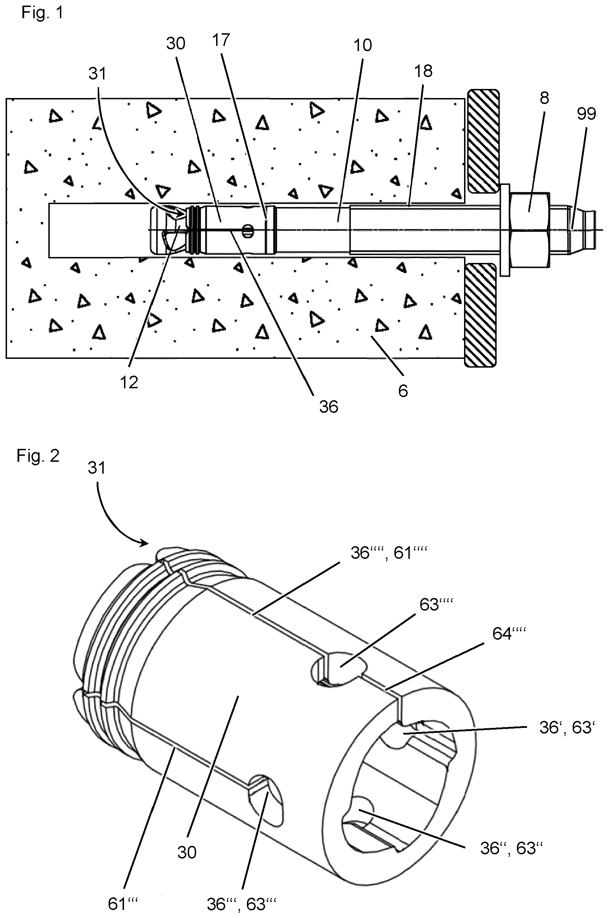

Figure 1 is a side view of an inventive expansion anchor.

Figure 2 is a perspective view of the expansion sleeve of the anchor of figure 1.

Figure 3 is a side view of the expansion sleeve of the anchor of figure 1.

Figure 4 is a cross-sectional view A-A according to figure 3 of the expansion sleeve of the anchor of figure 1.

The figures show an embodiment of an inventive expansion anchor. The expansion anchor comprises an elongate anchor bolt 10 defining a longitudinal axis 99, an expansion sleeve 30, which surrounds the anchor bolt 10, and a wedge body 12 provided on the anchor bolt 10, namely in the vicinity of the front end of the anchor bolt 10. The wedge body 12 is designed for wedging the expansion sleeve 30 radially outwardly when the wedge body 12 is drawn into the expansion sleeve 30 in the rearwards direction, i.e. in the pull-out direction. For this purpose, the lateral surface of the wedge body 12 converges rearwardly, at least regionally. The longitudinal axis 99 extends through the front end and through the rear end of the anchor bolt 10.

The anchor bolt 10 has a neck, which is located adjacent to and rearwards of the wedge body 12. The expansion sleeve 30 at least partly surrounds this neck, at least before installation of the anchor. At the neck, the diameter of the anchor bolt 10 can be minimal.

In the present embodiment, the expansion anchor is a stud type anchor. Hence, the anchor bolt 10 has, at the rearward end of the neck, a shoulder 17 facing forwards for axially engaging the expansion sleeve 30 and for advancing the expansion sleeve 30 forwards. In the present case, the wedge body 12 is, by way of example, integral with the remainder of the anchor bolt 10, but in alternative embodiments, the anchor bolt 10 can consist of several separate parts. In a rear region of the anchor bolt 10, the anchor bolt 10 is provided with a tension-introducing structure 18, which is here, by way of example, an external thread provided on the anchor bolt 10. However, this is an example only, and other structures such as internal threads, bayonet mechanisms or heads can also be envisaged.

The expansion sleeve 30 is a C-shaped clip and is provided with a plurality of expansion slits 36', 36", 36''', 36''''. Each of these expansion slits 36', 36", 36''', 36'''' originates at the front face 31 of the expansion sleeve 30 (i.e. at that face of the expansion sleeve 30 that faces the wedge body 12) and extend towards the rear end of the expansion sleeve 30 (and thus towards the rear end of the anchor bolt 10). Each of the expansion slits 36', 36", 36''', 36'''' radially cuts through the expansion sleeve 30, i.e. each of the expansion slits 36', 36", 36''', 36'''' divides the expansion sleeve 30.

The expansion slit 36' comprises a stem 61' and a head 63' that adjoins the stem 61'. The head 63' is arranged rearwardly of the stem 61'. Accordingly, the stem 61' is arranged between the head 63' and the front face 31 of the expansion sleeve 30. The head 63' forms the rearward end of the expansion slit 36'. The stem 61' is a narrow, generally linear trench. Compared to the stem 61', the head 63' has greater width in the circumferential direction, i.e. around the longitudinal axis 99. Due to its width, the head 63' forms a local weakening of the adjacent expansion sleeve 30, which facilitates expansion of the expansion sleeve 30.

In the shown embodiment, the stem 61' extends, generally, in the axial direction, i.e. generally parallel to the longitudinal axis 99. However, angled configurations could also be envisaged.

The head 63' as a non-circular, elongate, for example approximately elliptical, outline, wherein the elongate direction generally follows the circumferential direction of the anchor bolt 10. The head 63' is located off-centre with respect to the stem 61'. Accordingly, the centreline of the stem 61' does not include the centroid of the head 63'; in other words, the centroid of the head 63' is distant from the centreline of the stem 61' by a distance $d_o$.

The expansion sleeve 30 has non-constant wall-thickness t, i.e. the wall thickness t is dependent on the position on the expansion sleeve 30, in particular on the circumferential position. The head 63' is located off-centre with respect to the stem 61' towards an expansion sleeve region of reduced wall thickness. In other words, the head 63' reaches into a region that has smaller wall thickness, as compared to an imaginary arrangement in which the head 63' is located centred with respect to the stem 61'.

The head 63' has a width $w_h$, measured perpendicular to the longitudinal axis 99 in the circumferential direction, and a length $l_h$, measured parallel to the longitudinal axis 99. Preferably, a ratio of the width $w_h$ to the nominal diameter $d_{nom}$ of the expansion anchor is >= 0.25 and/or <=1.0 and/or a ratio of the length $l_h$ to the nominal diameter $d_{nom}$ of the expansion anchor is >= 0.2.

Expansion slit 36" also comprises a stem 61" and a head 63", wherein these items are arranged and configured in analogy to expansion slit 36', so that the description above is applicable mutatis mutandis. Expansion slit 36''' also comprises a stem 61''' and a head 63''', wherein these items are arranged and configured in analogy to expansion slit 36', so that the description above is applicable mutatis mutandis. Expansion slit 36'''' also comprises a stem 61'''' and a head 63'''', wherein these items are arranged and configured in analogy to expansion slit 36', so that the description above is applicable mutatis mutandis. The expansion slits 36', 36", 36''' are blind slits each, and accordingly, they do not reach the rear end of the expansion sleeve 30. Accordingly, the head 63' defines a rear end of expansion slit 36', the head 63" defines a rear end of expansion slit 36" and the head 63''' defines a rear end of expansion slit 36'''. The expansion slit 36'''', on the other hand, is a through slit which, extends all the way through the expansion sleeve 30, i.e. from the front face 31 of the expansion sleeve 30 to the rear end of the expansion sleeve 30. Accordingly, the expansion slit 36'''' has a tail 64'''', which extends from the head 63'''' to the rear end of the expansion sleeve 30. The head 63'''' is thus located axially between the stem 61'''' and the tail 64''''. The expansion slit 36'''' being a through slit can be interrelated to a manufacturing process in which a flat blank is bent around the anchor bolt 10 to give the expansion sleeve 30, so that the expansion slit 36'''' gives the closure interface of the expansion sleeve 30.

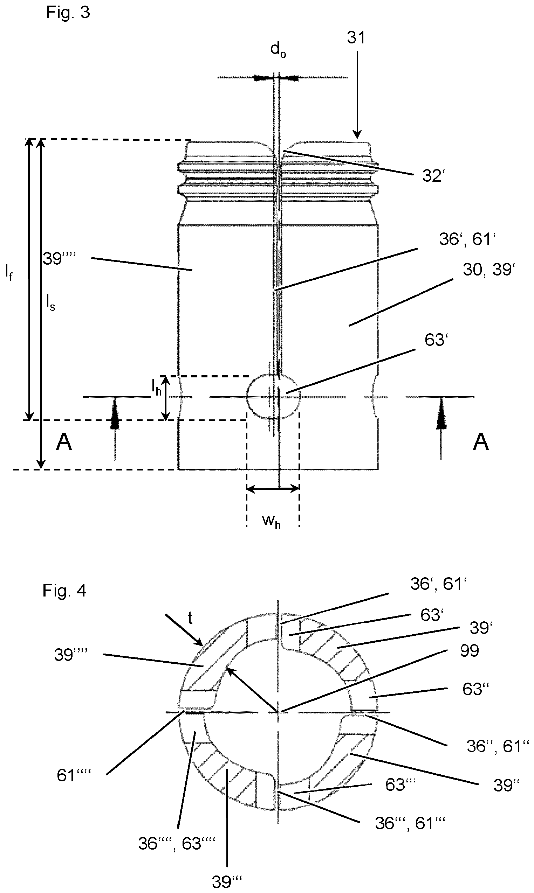

In the present embodiment, the front face 31 of the expansion sleeve 30 includes delta structures that converge into the expansion slits 36', 36", 36''', 36''''. In case of expansion slit 36' the corresponding delta structure is marked with reference numeral 32' in figure 3. The remaining expansion slits 36", 36''', 36'''' have similar delta structures provided at the front face 31. The delta structures provide a rounding of the front face 31, which might counteract galling at the wedge body 12.

In use, the expansion anchor is introduced, front end first, into a hole in a substrate 6. Subsequently, the wedge body 12 is drawn into the front face 31 of the expansion sleeve 30. In the present embodiment, this is achieved by pulling the anchor bolt 10 together with the wedge body 12 rearwardly, in particular by tightening a nut 8 provided on the tension-introducing structure 18 of the anchor bolt 10. This loads the expansion sleeve 30 radially outwardly, thereby locking the expansion anchor in the substrate.

The expansion slits 36', 36", 36''', 36'''' and the associated delta structures define expansion fingers 39', 39", 39''', 39'''' on the expansion sleeve 30. The described configuration of the expansion slits 36', 36", 36''', 36'''', in particular the described offset, allows the expansion fingers 39', 39", 39''', 39'''' to be relatively long. In particular, the expansion fingers 39', 39", 39''', 39'''' can each have a length $l_f$ which relates to the total length $l_s$ of the expansion sleeve 30 and/or the nominal diameter $d_{nom}$ of the expansion anchor as follows:

$$l_f/l_s > 0.8$$

$$l_f/d_{nom} > 1.3.$$

## Claims

1. Expansion anchor having

   - an anchor bolt (10),
   - an expansion sleeve (30) that surrounds the anchor bolt (10), and
   - a wedge body (12) located in a front region of the anchor bolt (10) for wedging the expansion sleeve (30), wherein the expansion sleeve (30) has a front face (31) facing the wedge body (12),
   - wherein at least one expansion slit (36) is provided within the expansion sleeve (30), wherein the expansion slit (36) originates at the front face (31) of the expansion sleeve (30), wherein the expansion slit (36) has a stem (61) and a head (63) that adjoins the stem (61), wherein the head (63) is wider than the stem (61), and wherein the stem (61) is located between the head (63) and the front face (31) of the expansion sleeve (30),

   **characterized in that**

   - the head (63) is located off-centre with respect to the stem (61).

2. Expansion anchor according to claim 1,
   **characterized in that**
   the head (63) has an elongate outline, wherein an axis of elongation of the elongate outline extents generally perpendicular to the stem (61).

3. Expansion anchor according to one of the preceding claims,
   **characterized in that**
   the expansion sleeve (30) has non-constant wall thickness (t), wherein the head (63) is off-centre with respect to the stem (61) into an expansion sleeve region of reduced wall thickness (t).

Fig. 1

Fig. 2

Fig. 3

$d_o$

31

32'

39''''

36', 61'

30, 39'

63'

$l_f$

$l_s$

$l_h$

A

A

$w_h$

Fig. 4

36', 61'

63'

39'

99

63''

36'', 61''

39''

63'''

36''', 61'''

63'''''

36'''''', 63''''''

39'''''

61'''''

39''''

t

39''''

Europäisches
Patentamt

European
Patent Office

Office européen
des brevets

## EUROPEAN SEARCH REPORT

Application Number

EP 21 16 8037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2019/243084 A1 (HILTI AG [LI]) 26 December 2019 (2019-12-26) * figures * | 1-3 | INV. F16B13/06 |
| A | DE 36 20 573 A1 (TOOLEX AG [CH]) 19 February 1987 (1987-02-19) * figures * | 1 | |
| A | KR 2016 0002742 U (LEE J Y) 8 August 2016 (2016-08-08) * figures * | 1 | |

TECHNICAL FIELDS
SEARCHED (IPC)

F16B

The present search report has been drawn up for all claims

| Place of search | Date of completion of the search | Examiner |
|---|---|---|
| Munich | 22 September 2021 | Pirog, Pawel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 16 8037

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2021

| Patent document cited in search report | | Publication date | Patent family member(s) | | Publication date |
|---|---|---|---|---|---|
| WO 2019243084 | A1 | 26-12-2019 | CA | 3098961 A1 | 26-12-2019 |
| | | | CN | 112105824 A | 18-12-2020 |
| | | | EP | 3584453 A1 | 25-12-2019 |
| | | | EP | 3810940 A1 | 28-04-2021 |
| | | | KR | 20210019994 A | 23-02-2021 |
| | | | SG | 11202010546V A | 27-11-2020 |
| | | | US | 2021231150 A1 | 29-07-2021 |
| | | | WO | 2019243084 A1 | 26-12-2019 |
| DE 3620573 | A1 | 19-02-1987 | NONE | | |
| KR 20160002742 | U | 08-08-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2848825 A1
- WO 19081300 A1
- WO 19243084 A1
- WO 15067578 A1
- EP 2514979 A1
- EP 2309138 A2
- WO 12126700 A1